(19) Europäisches Patentamt
European Patent Office
Office européen des brevets

(11) **EP 2 164 152 B1**

(12) **FASCICULE DE BREVET EUROPEEN**

(45) Date de publication et mention de la délivrance du brevet:
**03.06.2015 Bulletin 2015/23**

(21) Numéro de dépôt: **09354035.9**

(22) Date de dépôt: **13.08.2009**

(51) Int Cl.:
*H02J 7/00* $^{(2006.01)}$    *H02J 7/34* $^{(2006.01)}$
*H02J 7/35* $^{(2006.01)}$    *H01M 10/06* $^{(2006.01)}$
*H01M 10/44* $^{(2006.01)}$    *H01M 10/42* $^{(2006.01)}$

(54) **Procédé de charge pulsée d'une batterie dans un système autonome comportant une supercacité**

Pulsierendes Aufladeverfahren einer Batterie in einem autonomen System, das einen Superkondensator umfasst

Method for pulsed charging of a battery in a standalone system comprising a supercapacitor

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **16.09.2008 FR 0805075**

(43) Date de publication de la demande:
**17.03.2010 Bulletin 2010/11**

(73) Titulaire: **Commissariat à l'Énergie Atomique et aux Énergies Alternatives**
**75015 Paris (FR)**

(72) Inventeurs:
• **Labrunie, Antoine**
**75005 Paris (FR)**
• **Delaille, Arnaud**
**73000 Bassens (FR)**
• **Genies, Sylvie**
**38120 Saint Egréve (FR)**

(74) Mandataire: **Hecké, Gérard et al**
**Cabinet Hecké**
**10 rue d'Arménie - Europole**
**BP 1537**
**38025 Grenoble Cedex 1 (FR)**

(56) Documents cités:
WO-A-98/20594    FR-A- 2 868 218
FR-A- 2 870 391    US-A1- 2004 251 880

## Description

### Domaine technique de l'invention

L'invention est relative à un procédé de charge d'une batterie d'un système autonome au moyen d'une source d'énergie intermittente délivrant un courant continu, le procédé comportant au moins une phase de charge à courant pulsé gérée par un circuit de contrôle de la charge.

### État de la technique

Les systèmes autonomes alimentés par des sources d'énergie intermittente, par exemple, par des panneaux photovoltaïques, des générateurs de type éoliens, sont appelés à se développer. Ces systèmes autonomes sont souvent installés dans des endroits isolés, d'accès difficile pour lesquels le coût d'une alimentation classique en énergie, par câble, serait prohibitif. Pour ce type de configuration, l'optimisation de l'entretien et de l'autonomie revêt un caractère primordial afin de permettre une réduction importante des coûts de fonctionnement.

La réalisation de l'étape finale de la charge d'une batterie au moyen d'un courant pulsé a montré son intérêt sur le plan électrochimique. En effet, en adaptant la valeur du courant, le temps de charge et la fréquence de charge il est alors possible d'améliorer le processus de charge et ainsi la durée de vie de la batterie. Des procédés de charge et de fin de charge à courant pulsé ont notamment été décrits dans le document WO-A-2005/122319 et dans la demande de brevet international PCT/FR2007/001821 déposée le 05/11/2007.

Cependant, la puissance et l'énergie que peuvent générer les sources d'énergie intermittente, comme les panneaux photovoltaïques ou des éoliennes, sont limitées. C'est pourquoi, de manière conventionnelle, les batteries sont branchées directement sur la source d'énergie et un interrupteur réalise la déconnexion de la batterie en cas de surcharge.

On notera également le document FR 2 868 218 A, publié le 30 septembre 2005 qui concerne un procédé permettant de charger un accumulateur à partir d'une source de courant continu sujette à des fluctuations importantes. Le procédé comporte les étapes consistant à : charger progressivement un condensateur de stockage à une tension supérieure à la tension nominale de l'accumulateur; détecter un seuil de tension prédéterminé aux bornes du condensateur; et décharger ledit condensateur dans l'accumulateur, la décharge étant commandée par la détection dudit seuil.

### Objet de l'invention

L'invention a pour objet un procédé qui soit facile à mettre en oeuvre, qui soit énergétiquement compatible avec une fin de charge à courant pulsé et qui assure une durée de vie élevée de la batterie.

Le procédé selon l'invention est caractérisé par les revendications annexées et plus particulièrement par le fait qu'une supercapacité étant connectée en parallèle avec la batterie par l'intermédiaire d'un premier interrupteur électronique et en parallèle avec la source d'énergie par l'intermédiaire d'au moins un second interrupteur électronique, le circuit de contrôle réalise successivement :

- la mesure, pendant une impulsion de courant, de l'amplitude de l'impulsion de courant et de l'amplitude de l'augmentation de la tension aux bornes de la batterie, pendant ladite impulsion,
- la détermination de la résistance interne dynamique de la batterie, à partir desdites amplitudes,
- la détermination d'un seuil maximal de courant acceptable par la batterie en fonction d'un seuil de tension maximal prédéfini et de ladite résistance interne dynamique,
- la limitation de la valeur du courant de charge de la batterie, lors de l'impulsion de courant suivante, à une valeur inférieure audit seuil maximal de courant par contrôle de la durée de fermeture du second interrupteur électronique.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :

La figure 1 représente de manière schématique un système autonome selon l'invention.
La figure 2 représente, sous forme d'organigramme, un mode particulier de réalisation d'un procédé selon l'invention.
La figure 3 illustre les variations du courant I de charge de la batterie en fonction du temps dans un procédé selon l'invention.
La figure 4 illustre les variations de la tension $V_c$ aux bornes de la supercapacité en fonction du temps dans un procédé selon l'invention.
La figure 5 illustre les variations de la tension $U_{batt}$ aux bornes de la batterie en fonction du temps dans un procédé selon l'invention.

### Description d'un mode de réalisation préférentiel de l'invention

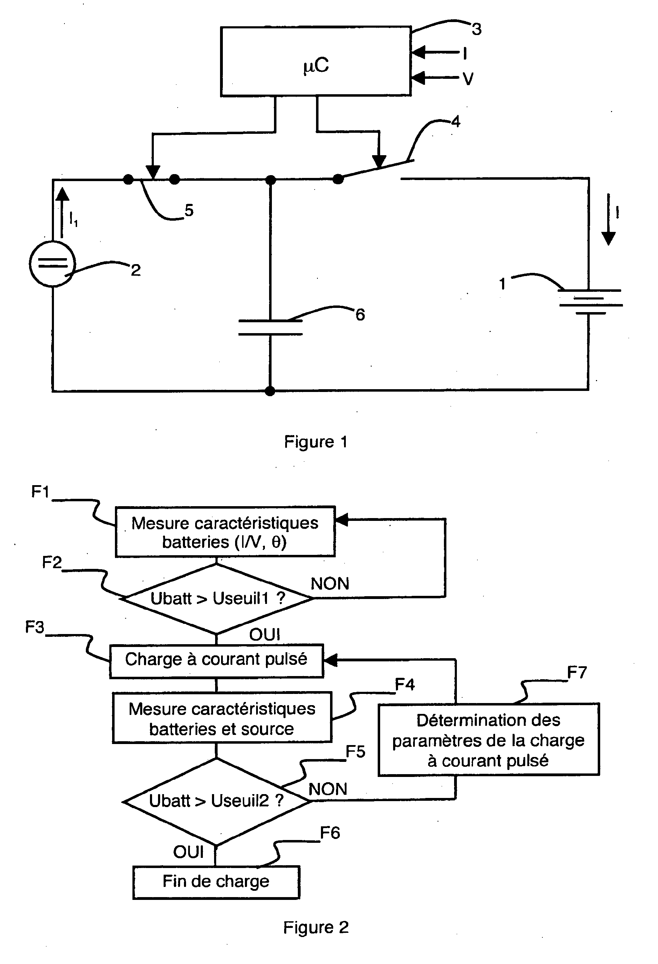

Comme illustré sur la figure 1, le système autonome comporte au moins une batterie 1 constituant un élément de stockage d'énergie, une source d'énergie 2 intermittente et un circuit de contrôle de charge 3 comportant des moyens de gestion de la charge et de la fin de charge. Des premier 4 et second 5 interrupteurs électroniques sont connectés en série entre la source d'énergie 2 intermittente et la batterie 1. L'ouverture et la fermeture des interrupteurs électroniques 4, 5 sont contrôlées par le circuit de contrôle de charge 3 par des moyens de contrôle intégrés.

La batterie 1 est, par exemple, une batterie au plomb ou nickel et de manière plus générale une batterie à électrolyte aqueux.

Durant ces périodes de fonctionnement, la source d'énergie 2 intermittente délivre un courant continu $I_1$ qui dépend de l'environnement extérieur.

Le système comporte également un élément intermédiaire de stockage d'énergie constitué par une supercapacité 6. La supercapacité 6 est connectée en parallèle avec l'élément de stockage d'énergie 1 par l'intermédiaire du premier interrupteur électronique 4 et en parallèle avec la source d'énergie 2 intermittente par l'intermédiaire d'au moins un second interrupteur électronique 5. Comme illustré sur la figure 1, la supercapacité 6 est ainsi connectée entre les premier et second interrupteurs électroniques. L'élément de stockage intermédiaire 6 doit présenter des caractéristiques de stockage, notamment en termes de rendement et de durée de vie, qui sont compatibles avec une utilisation dans un dispositif autonome.

Pour une bonne gestion de la charge pulsée, la tension aux bornes de la supercapacité 6 ne doit pas être nettement supérieure à celle de la batterie 1 afin d'éviter une détérioration de la batterie lors de chaque impulsion de courant. Avantageusement, lors de l'impulsion de courant, la tension est choisie proche de celle aux bornes de la batterie 1. Ainsi, en cas de défaut de commande d'un élément du circuit de contrôle 3 ou d'un interrupteur électronique 4 et 5, des courants importants sont évités. Par exemple, on peut choisir un interrupteur électronique 4 de type fermé sous tension nulle ce qui permet en cas de défaut de maintenir les deux tensions égales.

Un dispositif de stockage d'énergie hybride, comportant en combinaison une supercapacité et une micro-batterie est connue, notamment du document WO-A-2003/03667, pour permettre une charge rapide. L'association de ces deux composants permet de stocker une quantité d'énergie importante tout en disposant d'une puissance instantanée élevée. Dans ce document, la supercapacité est chargée très rapidement (en moins d'une seconde) à partir d'une source d'énergie externe, puis la micro-batterie est rechargée pendant le temps nécessaire, par exemple quelques minutes, à partir de la supercapacité.

Dans le mode de réalisation particulier illustré par l'organigramme de la figure 2, le circuit de contrôle 3 détermine (étape F1) les différentes caractéristiques de la batterie 1 à partir des mesures (I/V) de la tension et du courant aux bornes de la batterie 1, fournies par des circuits de mesure adaptés. Avantageusement, le circuit de contrôle 3 prend en compte la température de la batterie ou une température caractéristique. Le circuit de contrôle 3 compare (F2) les caractéristiques de la batterie à un premier seuil prédéterminé, le seuil de fin de charge du premier type de charge, par exemple la tension aux bornes de la batterie afin de déterminer si le seuil de fin de charge du premier type de charge est atteint.

Si la tension aux bornes de la batterie $U_{batt}$ est inférieure au premier seuil prédéfini $U_{seuil1}$ (sortie NON de F2), le critère de fin de charge n'est pas atteint, le circuit de contrôle 3 continue la charge de la batterie selon le premier mode de charge. Le critère de fin de charge $U_{seuil1}$ correspond par exemple à 90% voire 95% de la tension maximale de la batterie (ce qui correspond à 80% de l'état de charge).

Si la tension aux bornes de la batterie $U_{batt}$ est supérieure au premier seuil prédéfini $U_{seuil1}$ (sortie OUI de F2), le critère de fin de charge est atteint, le circuit de contrôle 3 provoque (F3) le passage au second mode de charge qui est une charge à courant pulsé. La charge à courant pulsé est gérée par le circuit de contrôle 3 qui détermine alors (étape F4) les différentes caractéristiques de la batterie 1 et de la source d'énergie 2 intermittente à partir des mesures (I/V) de la tension et du courant aux bornes de la batterie 1 et de la source d'énergie 2 intermittente.

Le circuit de contrôle 3 compare (F5) les caractéristiques de la batterie 1 à un second seuil prédéterminé, le seuil de fin de charge à courant pulsé, par exemple la tension aux bornes de la batterie $U_{batt}$ afin de déterminer si le seuil de fin de charge à courant pulsé, par exemple une tension de seuil $U_{seuil2}$, est atteint.

Si la tension aux bornes de la batterie $U_{batt}$ est supérieure au second seuil prédéfini $U_{seuil2}$ (sortie OUI de F5), le circuit de contrôle 3 arrête la charge (F6) de la batterie, par exemple par déconnexion de la batterie 1.

Si la tension aux bornes de la batterie $U_{batt}$ est inférieure au second seuil prédéfini $U_{seuil2}$ (sortie NON de F5), le circuit de contrôle 3 continue la charge de la batterie 1 selon le second mode de charge et le circuit de contrôle 3 détermine (F7), ensuite, les paramètres de charges optimaux pour une charge à courant pulsé. Ces paramètres sont, par exemple, la fréquence des impulsions de courant, typiquement 1 Hz, et le rapport cyclique de l'impulsion, c'est-à-dire la durée à l'état haut par rapport à la durée à l'état bas au sein d'une période, typiquement 25%. En conséquence, la valeur du courant, lors de l'impulsion, est directement déduite des valeurs des deux précédents paramètres. La batterie 1 est ensuite chargée avec une charge à courant pulsé selon les paramètres définis ci-dessus.

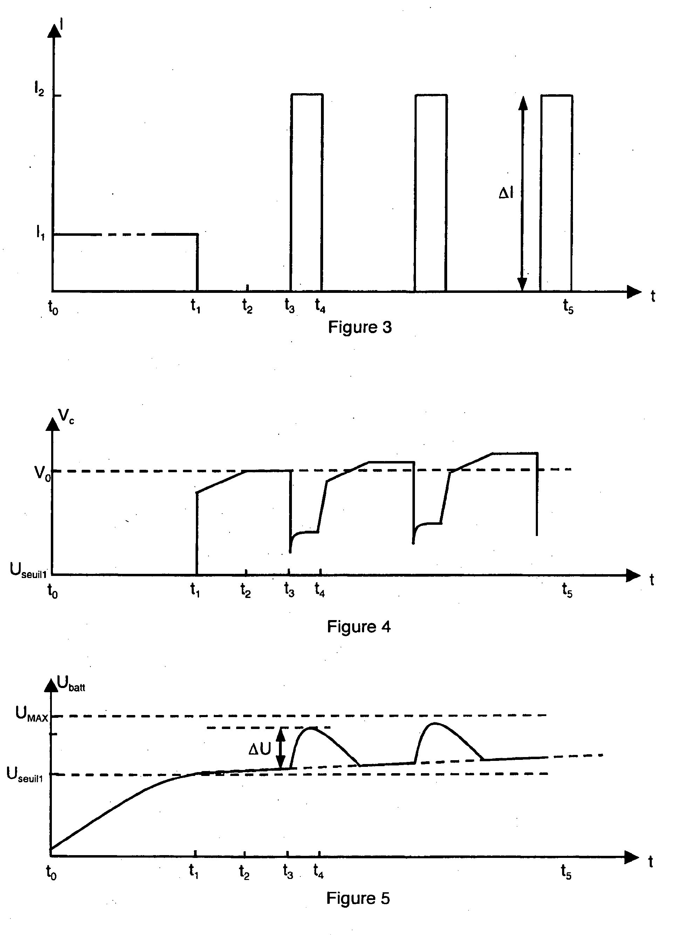

Comme illustré aux figures 3 et 5, la charge de la batterie 1 à partir de l'énergie générée par la source d'énergie 2 comporte deux phases successives. Dans une première phase de charge (entre les instants $t_0$ et $t_1$), la batterie 1 est chargée jusqu'à atteindre un premier seuil de charge. Cette première phase de charge est réalisée au moyen d'un premier type de charge, avantageusement une charge à courant continu, typiquement avec un courant $I_1$. Cependant, d'autres type de charge peuvent être utilisés, par exemple une charge à tension constante.

Dans une seconde phase de charge, le circuit de contrôle de charge 3 réalise la charge par une phase de charge à courant pulsé (entre les instants $t_1$ et $t_5$). Dans cette phase de charge, le courant continu délivré par la source d'énergie 2 est converti en un courant pulsé, ayant des caractéristiques prédéfinies. Pendant la phase de charge à courant pulsé, les premier et second interrupteurs 4 et 5 sont actionnés indépendamment. Les fonctionnements des premier et second interrupteurs 4 et 5 sont toujours indépendants l'un de l'autre tant dans la première que dans la seconde phase de charge.

Lors d'une charge à courant pulsé, le premier interrupteur 4 permet de définir les caractéristiques temporelles, notamment la fréquence et le rapport cyclique, des impulsions de courant. Le second interrupteur 5 permet de limiter la charge de la supercapacité en limitant le temps de charge.

Dans un premier temps de la charge à courant pulsé (entre les instants $t_1$ et $t_2$ sur la figure 2), le second interrupteur électronique 5 est fermé et le premier interrupteur électronique 4 est ouvert. Le courant I de charge de la batterie est nul (figure 3). La source d'énergie 2 est alors directement connectée à la supercapacité 6 qui est déconnectée de la batterie 1. La supercapacité 6 se charge. La source d'énergie 2 étant assimilée à une source de courant continu, la tension aux bornes de la supercapacité 6 est proportionnelle à sa durée de charge, c'est-à-dire à la durée qui sépare les instants $t_1$ et $t_2$. A l'instant $t_2$, la tension aux bornes de la supercapacité est égale à $V_0$ (figure 4).

Dans un deuxième temps (entre les instants $t_2$ et $t_3$ sur les figures 3 à 5), le second interrupteur 5 est ouvert. Les premier 4 et second 5 interrupteurs sont alors dans le même état. Dans ce deuxième temps, la supercapacité 6 qui a été chargée précédemment à la tension $V_0$ n'est plus alimentée en courant par la source d'énergie 2. La durée entre les instants $t_2$ et $t_3$ étant courte, on considère que la tension aux bornes de la capacité est constante. Par ailleurs, la tension aux bornes de la batterie étant constante, elle n'a pas évolué depuis l'arrêt du premier mode de charge, c'est-à-dire depuis l'instant $t_1$ (figure 5)

Dans un troisième temps, entre les instants $t_3$ et $t_4$ sur les figures 3 à 5, le premier interrupteur 4 est fermé, la supercapacité 6 n'étant plus connectée avec la source d'énergie 2, la supercapacité 6 charge alors la batterie 1 avec un courant $I_2$, ce qui correspond à une impulsion de courant. Le courant fourni par la supercapacité 6 diminue au fur et à mesure qu'elle se décharge. L'énergie accumulée dans la supercapacité est envoyée, pendant la durée $t_4$ $t_3$ dans la batterie 1. La batterie ayant une résistance interne $R_{ib}$, une surtension $\Delta U$ apparaît aux bornes de la batterie lors de chaque impulsion de courant, c'est-à-dire entre les instants $t_3$ et $t_4$ sur la figure 5. Sur les deux impulsions représentées à la figure 5, on constate que la tension aux bornes de la batterie, en dehors des impulsions, augmente légèrement, ce qui traduit une augmentation significative de l'état de charge.

Durant une impulsion de courant, l'état de la batterie 1 évolue peu et donc sa force électromotrice E est constante. L'évolution, en fonction du temps, de la tension $V_c(t)$ et du courant $I(t)$ de charge de la batterie peuvent être décrit par les équations suivantes :

$$V_c(t) = E + (V_0 - E).e^{-t/R_iC}$$

$$I(t) = \frac{(V_0 - E).e^{-t/R_iC}}{R_i}$$

dans lesquelles :

E est la force électromotrice de la batterie 1,
$V_0$ est la tension aux bornes de la supercapacité 6 au début de l'impulsion de courant,
$R_i$ est la somme de la résistance interne de la supercapacité 6 et de la batterie 1,
C est la capacité électrique de la supercapacité 6.

La répétition périodique de ces impulsions constitue le courant pulsé utilisé pour la phase de charge à courant pulsé destinée à terminer la charge de la batterie. La fréquence et le rapport cyclique du courant pulsé sont définis par la fréquence de basculement des interrupteurs 4 et 5.

La tension et le courant de charge de la batterie sont des fonctions de la tension aux bornes de la supercapacité $V_c$ qui est elle-même fonction de son temps de charge à partir de la source d'énergie 2. La durée entre les instants $t_3$ et $t_4$ correspond à la durée de l'impulsion de courant. La durée entre les instants $t_1$ et $t_3$ correspond au reste de la période pendant laquelle aucun courant n'est fourni à la batterie 1. La période des impulsions de courant correspond à la durée entre les instants $t_1$ et $t_4$. De manière avantageuse, l'ajustement de la fréquence et du rapport cyclique de la charge à courant pulsé est obtenu au moyen de la durée entre les instants $t_2$ et $t_3$.

Si la durée entre les instants $t_1$ et $t_2$ est supérieure à la période déterminée par le circuit de contrôle 3 pour réaliser la charge à courant pulsé, alors le second interrupteur 5 est toujours à l'état fermé.

Au moyen de la supercapacité 6 et de l'ouverture et de la fermeture indépendantes des premier 4 et second 5 interrupteurs, le circuit de contrôle 3 peut réaliser la charge de la batterie sous la forme d'une impulsion de courant d'amplitude $I_2$, supérieure à l'amplitude $I_1$, du courant pouvant être fournie par la source d'énergie 2 avec une très grande liberté de fréquence d'impulsion et de rapport cyclique.

Lors de la charge à courant pulsé, durant chaque période, le transfert de l'énergie se fait de la source d'énergie 2 vers la supercapacité 6, puis de la supercapacité 6 vers la batterie 1, cela peut également être simultané.

L'introduction de la supercapacité 6, servant d'élément intermédiaire de stockage, entre la source d'énergie 2 et la batterie 1, permet d'obtenir des impulsions de courant d'amplitude plus élevée pendant la phase de charge à courant pulsé tout en restituant rapidement à la batterie 1 l'énergie fournie par la source d'énergie 2.

Pour éviter toute dégradation accélérée de la batterie 1, la tension à ses bornes $U_{batt}$ ne doit pas dépasser un seuil de tension prédéfini $U_{MAX}$. La batterie 1 ayant une résistance interne, lors de chaque impulsion de courant, il y a une augmentation de la tension à ses bornes qui peut être préjudiciable. De ce fait, pour éviter que pendant une impulsion de courant, la tension aux bornes de la batterie ne dépasse le seuil de tension maximal $U_{MAX}$, le circuit de contrôle 3 limite le courant de charge $I_2$ à un seuil maximal de courant $I_{MAX}$ acceptable. L'état de la batterie 1 variant avec les impulsions de courant, le courant maximal acceptable $I_{MAX}$ peut varier à chaque impulsion. Afin d'éviter toute augmentation de la tension préjudiciable à la batterie, l'énergie emmagasinée dans la supercapacité 6, qui est ensuite délivrée à la batterie 1 sous la forme d'une impulsion de courant, est limitée.

Ainsi, le circuit de contrôle 3 mesure, pour chaque impulsion de courant, l'amplitude de la tension $\Delta U$ aux bornes de la batterie 1, c'est-à-dire la différence de tension $\Delta U$ entre les tensions maximales et minimales atteintes lors d'une impulsion de courant. La tension minimale correspond typiquement à la tension à vide $U_{seuil1}$ aux bornes de la batterie. Le circuit de contrôle 3 mesure également pour chaque impulsion, l'amplitude de l'impulsion de courant $\Delta I$ aux bornes de la batterie. Le courant minimal peut être nul, c'est le cas typiquement quand le premier interrupteur 4 est ouvert, la batterie n'est pas chargée. Le courant peut également être proche de celui délivré en continu par la source d'énergie 2, typiquement en laissant le premier interrupteur fermé en continu et en ne contrôlant que l'ouverture et la fermeture du second interrupteur 5.

Le circuit de contrôle 3 détermine ensuite, à partir des valeurs mesurées des amplitudes de tension $\Delta U$ et de courant $\Delta I$ aux bornes de la batterie, la valeur de la résistance interne dynamique de la batterie RID par la formule RID = $\Delta U / \Delta I$. La résistance interne dynamique RID de la batterie est une caractéristique qui évolue au fur et à mesure de la charge.

Le circuit de contrôle 3 détermine ensuite le seuil de courant $I_{MAX}$ acceptable par la batterie 1 au moyen du seuil de tension maximal $U_{MAX}$ acceptable par la batterie et de la résistance interne dynamique avec la formule : $I_{MAX} = (U_{MAX} - U_{seuil1}) / RID$ où $U_{seuil1}$ correspond à la tension à vide aux bornes de la batterie 1. Lors de la charge à courant pulsé, le courant de charge $I_2$ de la batterie ne peut être supérieur au seuil maximal de courant $I_{MAX}$ acceptable.

Ainsi, pour la prochaine impulsion de courant, si la valeur du courant de charge $I_2$, défini par les conditions optimales de charge est supérieure au seuil de courant $I_{MAX}$ acceptable, alors le circuit de contrôle 3 limite la valeur du courant de charge de la batterie, à une valeur inférieure au seuil maximal de courant $I_{MAX}$. La valeur du courant lors d'une impulsion de courant étant reliée à l'énergie emmagasinée dans la supercapacité et donc à la tension à ses bornes, le circuit de contrôle limite la durée de la charge de la supercapacité par le contrôle de la durée de fermeture du second interrupteur électronique (5). Cette durée de charge de la supercapacité est représentée sur les figures 3 à 5 par la durée entre les instants $t_1$ et $t_2$.

A titre d'exemple, le système autonome est constitué par une batterie 1 au plomb de type 12V et 65Ah. La batterie 1 est, dans une première phase, chargée avec un courant constant égal à 2A. Puis, quand la tension aux bornes de la batterie 1 atteint 13,85V (correspondant sensiblement à une batterie chargée à 80%), la batterie 1 est chargée avec un courant pulsé. Ce courant pulsé est un signal carré qui varie entre 0 et 8A, avec une fréquence de l'ordre de 1 Hz et un rapport cyclique d'environ ¼ (c'est-à-dire 25% du temps avec un courant de charge de 8 A et 75% du temps avec courant nul). La supercapacité 6 est de préférence constituée par un assemblage de sept supercapacités de 2,5V pour 350F et forme une supercapacité ayant une tension nominale de 17,5V et une capacité d'environ 50F. La supercapacité est chargée par un courant égale à 2A.

Lors de la phase de charge à courant pulsé, le circuit de contrôle 3 peut, par l'intermédiaire des moyens de contrôle de la fermeture et de l'ouverture des interrupteurs électroniques 4 et 5 faire évoluer les caractéristiques du courant pulsé (intensité de charge, durée de charge, fréquence de charge...) en fonction de l'état de charge de la batterie 1.

Les algorithmes de recherche et de charge peuvent être intégrés dans les moyens de gestion de la charge et de la fin de charge et/ou dans une unité de contrôle. Des circuits de mesure permettant respectivement de mesurer la tension V aux bornes de la batterie 1 et le courant I de charge de la batterie, sont connectés à des entrés du circuit de contrôle de charge 3.

De manière conventionnelle, un circuit de mesure de la température est également connecté au circuit de contrôle 3 et une charge (non représentée) est classiquement alimentée par la batterie 1.

La source d'énergie 2 est, par exemple, de type éolien, micro-hydraulique ou, avantageusement, un panneau photovoltaïque et l'élément de stockage d'énergie 1 est, par exemple, une batterie de type plomb ou nickel.

## Revendications

**1.** Procédé de charge d'une batterie d'un système autonome au moyen d'une source d'énergie intermittente (2) délivrant un courant continu ($I_1$), le procédé comportant au moins une phase de charge à courant pulsé gérée par un circuit de contrôle (3) de la charge, procédé **caractérisé en ce qu'**une supercapacité (6) étant connectée en parallèle avec la batterie (1) par l'intermédiaire d'un premier interrupteur électronique (4) et en parallèle avec la source d'énergie (2) par l'intermédiaire d'au moins un second interrupteur électronique (5), le circuit de contrôle 3 réalise successivement :

- la mesure, pendant une impulsion de courant, de l'amplitude de l'impulsion de courant et de l'amplitude de l'augmentation de la tension aux bornes de la batterie (1), pendant ladite impulsion,
- la détermination de la résistance interne dynamique (RID) de la batterie (1), à partir desdites amplitudes,
- la détermination d'un seuil maximal de courant ($I_{MAX}$) acceptable par la batterie en fonction d'un seuil de tension maximal ($U_{MAX}$) prédéfini, de ladite résistance interne dynamique (RID) et de la tension à vide aux bornes de la batterie ($U_{seuil1}$),
- la limitation de la valeur du courant de charge de la batterie, lors de l'impulsion de courant suivante, à une valeur inférieure audit seuil maximal de courant ($I_{MAX}$) par contrôle de la durée de fermeture du second interrupteur électronique (5).

**2.** Procédé selon la revendication 1, **caractérisé en ce que** la source d'énergie intermittente (2) est un panneau photovoltaïque.

**3.** Procédé selon l'une des revendications 1 et 2, caractérisé en cé que la batterie (1) est une batterie à électrolyte aqueux.

**4.** Procédé selon l'une quelconque des revendications 1 à 3, **caractérisé en ce qu'**il comporte une phase de charge à courant constant avant la phase de charge à courant pulsé.

## Patentansprüche

**1.** Verfahren zum Laden einer Batterie eines autonomen Systems mittels einer einen Gleichstrom ($I_1$) liefernden intermittierenden Energiequelle (2), wobei das Verfahren wenigstens eine Ladephase mit pulsierendem Strom, die durch einen Kreis zur Steuerung (3) des Ladens gesteuert wird, umfasst, Verfahren, das **dadurch gekennzeichnet ist, dass** eine Superkapazität (6) mittels eines ersten elektronischen Schalters (4) zu der Batterie (1) parallel geschaltet ist und mittels wenigstens eines zweiten elektronischen Schalters (5) zu der Energiequelle (2) parallel geschaltet ist, wobei der Steuerungskreis (3) nacheinander vollzieht:

- die Messung - während eines Stromimpulses
- der Amplitude des Stromimpulses und der Amplitude der Erhöhung der Spannung an den Anschlüssen der Batterie (1) während des Impulses,
- die Bestimmung des dynamischen Innenwiderstandes (RID) der Batterie (1) anhand der Amplituden,
- die Bestimmung einer für die Batterie akzeptablen maximalen Stromschwelle ($I_{MAX}$) in Abhängigkeit von einer vordefinierten maximalen Spannungsschwelle ($U_{MAX}$), von dem dynamischen Innenwiderstand (RID) und von der Leerlaufspamung an den Anschlüssen der Batterie ($U_{seuil1}$),
- die Begrenzung des Wertes des Ladestroms der Batterie beim folgenden Stromimpuls auf einen Wert unterhalb der maximalen Stromschwelle ($I_{MAX}$) durch Steuern der Schließdauer des zweiten elektronischen Schalters (5).

**2.** Verfahren nach Anspruch 1, **dadurch gekennzeichnet, dass** die intermittierende Energiequelle (2) ein Photovoltaik-Paneel ist.

**3.** Verfahren nach einem der Ansprüche 1 und 2, **dadurch gekennzeichnet, dass** die Batterie (1) eine Batterie mit wässrigem Elektrolyt ist.

**4.** Verfahren nach einem der Ansprüche 1 bis 3, **dadurch gekennzeichnet, dass** es vor der Ladephase mit pulsierendem Strom eine Ladephase mit Konstantstrom umfasst.

## Claims

**1.** A method for charging a battery of an autonomous system by means of an intermittent power source (2) delivering a direct current (I1), the method comprising at least one phase of charging at pulsed current managed by a charging control circuit (3), a method **characterized in that** a super-capacitance (6) being connected in parallel with the battery (1) via a first electronic switch (4) and in parallel with the power source (2) via at least a second electronic switch (5), the control circuit (3) successively performs:

- measuring, during a current pulse, the amplitude of the current pulse and the amplitude of the voltage increase at the terminals of the battery (1) during said pulse,
- determining the dynamic internal resistance (RID) of the battery (1) from said amplitudes,

- determining a maximum current threshold ($I_{MAX}$) acceptable by the battery according to a predefined maximum voltage threshold ($U_{MAX}$), to said dynamic internal resistance (RID) and to the no-load voltage ($U_{threshold1}$) at the battery terminals,

- limiting the value of the battery charging current, at the next current pulse, to a value lower than said maximum current threshold ($I_{MAX}$) by controlling the closing time of the second electronic switch (5).

2. The method according to claim 1, **characterized in that** the intermittent power source (2) is a photovoltaic panel.

3. The method according to one of claims 1 and 2, **characterized in that** the battery (1) is a battery with an aqueous electrolyte.

4. The method according to any one of claims 1 to 3, **characterized in that** it comprises a charging phase at constant current before the charging phase at pulsed current.

Figure 1

Figure 2

Figure 3

Figure 4

Figure 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2005122319 A
- FR 2007001821 W
- FR 2868218 A
- WO 200303667 A